# EUROPÄISCHE PATENTSCHRIFT

(11) **EP 0 445 254 B1**
(45) Veröffentlichungstag und Bekanntmachung des Hinweises auf die Patenterteilung: **24.08.1994**
(21) Anmeldenummer: 90914060.0
(22) Anmeldetag: 27.09.1990
(51) Int. Cl.: B32B 27/04, C08J 9/00, C08J 5/24

(54) **IN DER HITZE EXPANDIERBARES KUNSTSTOFFLAMINAT, EIN VERFAHREN ZU DESSEN HERSTELLUNG UND VERWENDUNG DESSELBEN**
HEAT-EXPANDABLE PLASTIC LAMINATE, PROCESS FOR MAKING IT AND USE THEREOF
STRATIFIE DE PLASTIQUE EXPANSIBLE A LA CHALEUR, SON PROCEDE DE FABRICATION ET SON UTILISATION

(30) Priorität: 28.09.1989 AT 2264/89
(43) Veröffentlichungstag der Anmeldung: 11.09.1991
(73) Patentinhaber: ISOVOLTA Österreichische Isolierstoffwerke Aktiengesellschaft, 2355 Wiener Neudorf (AT)
(72) Erfinder: GSELLMANN, Helmut, A-8010 Graz (AT)
(86) Internationale Anmeldenummer: AT9000095
(87) Internationale Veröffentlichungsnummer: WO9104854

(56) Entgegenhaltungen:
- EP-A- 0 173 382
- DE-A- 3 319 373
- DE-A- 3 508 600
- US-A- 3 562 081
- US-A- 4 178 411
- Patent Abstracts of Japan, No. C-684,20 February 1990 & JP,A, 1282376

## Beschreibung

### Technisches Gebiet

Die Erfindung betrifft ein Laminat auf Basis eines Kunststoffes und hochelastischen Verstärkungsfasern. Sie betrifft ferner ein vorteilhaftes Verfahren zur Herstellung des erfindungsgemäßen Laminates sowie die vorteilhafte Verwendung desselben.

### Stand der Technik

Laminate dieser Art werden in der Technik in großem Ausmaß eingesetzt, z.B. als hochfeste und/oder elastische Konstruktionsmaterialien oder als elektrische Isoliermaterialien bei der Herstellung von elektrischen Maschinen und Apparaten. Als mechanisch und elektrisch hochbeanspruchbare Isoliermaterialien werden z.B. Epoxydharzlaminate verwendet, wie sie unter den Normbezeichnungen Epoxyd-Glas-Hartgewebe (Hgw) oder Epoxyd-Glas-Matte (Hm) bekannt sind. Aus solchen Epoxydharzlaminaten werden z.B. beim Bau von Statoren von Hochspannungsmaschinen zwischen den Wickelköpfen als elektrisch isolierende Abstandshalter Zuschnitte aus solchen Hgw-Laminaten eingefügt und dort fixiert. Da die Zwischenräume zwischen den Wickelköpfen unregelmäßige Formen aufweisen, erfolgt der Kontakt dieser Abstandshalter nur mehr oder weniger punkt- bzw. linienförmig.

### Darstellung der Erfindung

Der Erfindung liegt nun zunächst die Aufgabe zugrunde, ein Laminat der eingangs genannten Art , das in der Hitze expandierbar und danach aushärtbar ist und das bei seiner Verwendung durch seine Expandierbarkeit auch unregelmäßig geformte Räume auszufüllen vermag, sowie ein Verfahren, zu dessen Herstellung anzugeben. Diese Aufgabe wird durch das erfindungsgemäße Laminat (4) gelöst, das dadurch gekennzeichnet ist, daß es hochelastische Verstärkungsfasern wie Glasfasern in elastisch komprimiertem Zustand und einen in der Hitze erweichbaren, duromeren Kunststoff als Bindemittel enthält und demzufolge in der Hitze expandierbar ist.

Eine vorteilhafte Ausgestaltung des erfindungsgemäßen Laminates ist dadurch gekennzeichnet, daß der duromere Kunststoff einer auf Basis eines Epoxydharzes ist, das vorteilhaft ein Epoxydharz auf Basis eines Diclycidylethers des Bisphenols A ist.

Ferner enthält das erfindungsgemäße Laminat vorteilhafterweise einen Harzanteil von 10 - 28 Gew.%, bevorzugt 10 - 20 Gew.%.

Das erfindungsgemäße Laminat wird durch ein vorteilhaftes Verfahren hergestellt, das dadurch gekennzeichnet ist, daß die aus den Verstärkungsfasern bestehenden Fasermatten mit dem duromeren Kunststoff imprägniert werden, daß eine oder mehrere dieser imprägnierten Fasermatten übereinander in einer Presse komprimiert und auf Temperaturen gebracht werden, bei denen der Kunststoff erweicht und daß die so komprimierten und heißen Fasermatten anschließend in komprimiertem Zustand zwecks Wiederverfestigung des Kunststoffes abgekühlt und schließlich als fertiges Laminat (4) aus der Presse ausgetragen werden. Dabei erfolgt die Komprimierung der übereinanderliegenden imprägnierten Fasermatten vorteilhaft auf eine vorgegebene Dicke.

In einer vorteilhaften Ausgestaltung des Verfahrens wird dem duromeren Kunststoff ein Härtungskatalysator, der während der Laminatherstellung noch nicht aktiviert wird, zugesetzt.

Ferner werden in diesem Verfahren vorteilhafterweise eine oder mehrere der imprägnierten Fasermatten (1) in der Presse bei einer Preßplattentemperatur von 110° - 155°C komprimiert.

Die Erfindung betrifft ferner eine vorteilhafte Verwendung des erfindungsgemäßen Laminats, die dadurch gekennzeichnet ist, daß man einen Zuschnitt aus dem Laminat in einem Zwischenraum zwischen Teilen von Maschinen oder Apparaten anbringt und danach erhitzt, wobei das Kunstharz zunächst erweicht und das Laminat dadurch infolge Entspannens der elastisch komprimierten Fasermasse expandiert, so daß es die genannten Zwischenräume ausfüllt und der Kunststoff danach aushärtet.

Gemäß einer vorteilhaften Ausgestaltung der erfindungsgemäßen Verwendung erfolgt das Erhitzen durch Tränken des Laminat-Zuschnitts in einem heißen, flüssigen duromeren Kunststoff als Tränkmedium, welches die Poren des expandierten Laminat-Zuschnittes ausfüllt und der duromere Kunststoff des Laminates gemeinsam mit dem in den Poren des expandierten Laminats aufgenommenen Tränkmedium aushärtet. Dabei dient der im Laminat gegebenenfalls enthaltene Katalysator zumindest überwiegend zur Beschleunigung der Härtungsreaktion des duromeren Tränkmediums.

### Beschreibung der Figuren

Figur 1 zeigt die imprägnierten Glasfasermatten 1, die auf einem Preßblech 2 in sechs Lagen zu einem Mattenstapel 3, der eine Dicke von 7 - 8 mm aufweist, aufeinandergestapelt sind.

Figur 2 zeigt das durch Komprimierung des Mattenstapels 3 hergestellte, fertige Laminat 4.

Figur 3 zeigt zwei benachbarte Spulenteile 5 der Statorwicklung einer elektrischen Hochspannungsmaschine an den Wickelköpfen schematisch im Schnitt, wobei im Zwischenraum zwischen diesen Spulenteilen 5 ein Zuschnitt 6 des Laminats 4 angebracht und dabei auf geeignete Weise provisorisch fixiert wird.

Figur 4 zeigt den expandierten Laminatzuschnitt 7, der den Zwischenraum zwischen den Spulenteilen 5 vollständig ausfüllt.

### Ein Weg zur Ausführung der Erfindung

Zur Herstellung eines expandierbaren Laminates mit einer Dicke von 2 mm geht man z. B. von einem Glasfasermattenband mit einem Flächengewicht von 450 g/m² aus, das aus geschnittenen, nicht orientierten E-Glasspinnfäden hergestellt ist, und von einem Imprägnierharz, das zu 98,4 % aus einem Epoxydharz auf Basis eines Diclycidylethers des Bisphenols A und zu 1,6 % aus Zinknaphthenat als latentem Beschleuniger besteht. Der Zusatz des Zinknaphthenats hat noch die für das weitere Verfahren vorteilhafte Wirkung, daß es den Schmelzbereich nach Kofler des eingesetzten Epoxydharzes, der um 120° C liegt, herabsetzt, so daß das Imprägnierharz selbst einen Schmelzbereich um 70° C aufweist.

Die Imprägnierung erfolgt in einer Imprägnieranlage, in der das kontinuierlich zugeführte Glasfasermattenband mit einer Lösung des Imprägnierharzes in Methylethylketon als Lösungsmittel betropft und anschließend beim Durchlauf durch einen Trockenkanal das Lösungsmittel abgedampft wird. Das so imprägnierte Glasfaserband wird dann wie üblich in Stücke abgelängt und abgestapelt.

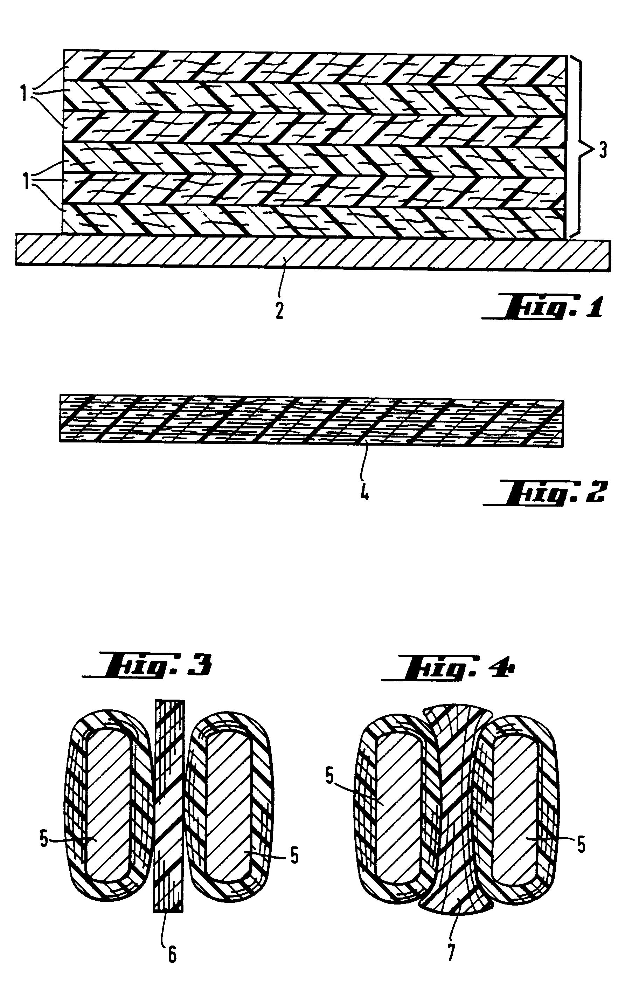

Zur Herstellung des Laminats wird nun, wie in Fig. 1 schematisch angedeutet, die imprägnierte Glasfasermatte 1 auf einem Preßblech 2 in sechs Lagen aufeinandergestapelt. Dieser Mattenstapel 3, der eine Dicke von 7 - 8 mm aufweist, wird dann auf dem Preßblech 2 in eine Presse mit beheiz- und rückkühlbaren Preßplatten gebracht und auf eine Dicke von 2 mm (durch Zufahren der Preßplatten gegen Abstandsleisten) komprimiert. Die Preßplatten werden dann auf 120° C aufgeheizt und diese Temperatur während ca. 1 Stunde gehalten. Dabei wird das Preßgut vollständig durchwärmt und das Imprängierharz wegen seines niedrigen Schmelzbereiches erweicht, wonach es verfließt und sich gleichmäßig über das Volumen des Preßgutes verteilt. Anschließend werden die Preßplatten und damit das Preßgut auf etwa Raumtemperatur rückgekühlt, wodurch sich das Imprägnierharz wieder verfestigt und der komprimierte Mattenstapel in das fertige Laminat 4 - siehe Figur 2 - übergeführt wird, das man dann aus der Presse austrägt. Das Flächengewicht des 2 mm dicken Laminats beträgt 3,260 g/m² mit einem Glasfasergehalt von 80 Gew. % und einem Harzgehalt von 20 Gew.%.

### Gewerbliche Verwendbarkeit

Das erfindungsgemäße Laminat kann für den Bau von Statoren von Hochspannungsmaschinen verwendet werden, wobei ein zwischen den Spulenteilen der Statorwicklung eingefügter und dort fixierter Zuschnitt des Laminats als elektrisch isolierender Abstandshalter dient. Wie aus Figur 3 hervorgeht, wird im Zwischenraum zwischen den Spulenteilen 5 ein Zuschnitt 6 des Laminates 4 angebracht und dabei auf geeignete Weise provisorisch fixiert. Die Fertigstellung der Isolierung des Stators erfolgt nun wie üblich nach dem bekannten Vakuum-Druck-Imprägnierverfahren. Bei diesem Verfahren wird die Hauptisolierung der Stator-Wicklung, die in Form von porösen Isolierbändern auf Basis von Elektroglimmer auf die Leiter der Wicklungen aufgebracht ist, mit einem heißen, flüssigen Tränkmedium z.B. bei 70° C durch Untertauchen des Stators in dem Tränkmedium unter Vakuum imprägniert, wobei das Tränkmedium, welches z.B. aus einem Epoxydharz auf Basis des Diclycidylethers des Bispohenols A mit einem Carboxylsäureanhydrid als Härter besteht, alle Poren in der Isolationen ausfüllt. Der so imprägnierte Stator wird dann in einem Ofen einer weiteren Temperaturbehandlung unterzogen, bei der das Kunstharz des Tränkmediums aushärtet. Bei diesem Verfahren werden nun auch die in den Zwischenraum zwischen den Spulenteilen 5 angebrachten Laminatzuschnitte 6 im heißen Tränkmedium rasch aufgeheizt, wodurch das Kunstharz des Laminates erweicht und der Laminatzuschnitt 6 infolge Entspannens der elastisch komprimierten Fasermasse expandiert und die Zwischenräume zwischen den Spulenteilen 5 vollständig ausfüllt (siehe Fig. 4). Gleichzeitig werden ähnlich wie bei der übrigen Isolierung die Poren des expandierten Laminatzuschnitts 7 ausgefüllt. Bei der nachträglichen Wärmebehandlung im Ofen wird das Epoxydharz des Laminats gemeinsam mit dem aufgenommenen Tränkmedium ausgehärtet, wobei das im Laminat enthaltene Zinknaphthenat als Beschleuniger für die Härtungsreaktion wirkt.

## Patentansprüche

1. Laminat (4) auf Basis eines Kunststoffes und hochelastischen Verstärkungsfasern, dadurch gekennzeichnet, daß es hochelastische Verstärkungsfasern wie Glasfasern in elastisch komprimiertem Zustand und einen in der Hitze erweichbaren, duromeren Kunststoff als Bindemittel enthält und demzufolge in der Hitze expandierbar ist.

2. Laminat nach Anspruch 1, dadurch gekennzeichnet, daß der duromere Kunststoff einer auf Basis eines Epoxydharzes ist.

3. Laminat nach Anspruch 2, dadurch gekennzeichnet, daß das Epoxydharz auf Basis eines Diglycidylethers des Bisphenols A aufgebaut ist.

4. Laminat nach einem der Ansprüche 1 - 3, dadurch gekennzeichnet, daß sein Harzanteil 10 - 28 Gew.% beträgt.

5. Laminat nach Anspruch 4, dadurch gekennzeichnet, daß sein Harzanteil 10 - 20 Gew.% beträgt.

6. Verfahren zur Herstellung eines Laminates nach einem der Ansprüche 1 - 5, dadurch gekennzeichnet,daß aus den Verstärkungsfasern bestehende Fasermatten mit dem duromeren Kunststoff imprägniert werden, daß mehrere dieser imprägnierten Fasermatten (1) übereinander in einer Presse komprimiert und auf Temperaturen gebracht werden, bei denen der Kunststoff erweicht und daß die so komprimierten Fasermatten anschliessend in komprimiertem Zustand zwecks Wiederverfestigung des Kunststoffes abgekühlt und schließlich als fertiges Laminat (4) aus der Presse ausgetragen werden.

7. Verfahren nach Anspruch 6, dadurch gekennzeichnet, daß die Komprimierung der übereinanderliegenden imprägnierten Fasermatten auf eine vorgegebene Dicke erfolgt.

8. Verfahren nach Anspruch 6 oder 7, dadurch gekennzeichnet, daß dem duromeren Kunststoff ein Härtungskatalysator zugesetzt wird, der während der Laminatherstellung noch nicht aktiviert ist.

9. Verfahren nach einem der Ansprüche 6 - 8. dadurch gekennzeichnet, daß eine oder mehrere der imprägnierten Fasermatten (1) in der Presse bei einer Preßplattentemperatur von 110° - 155°C komprimiert werden.

10. Verwendung eines Laminats nach einem der Ansprüche 1 bis 5 oder eines nach den Ansprüchen 6 - 8 hergestellten Laminats, dadurch gekennzeichnet, daß man einen Zuschnitt (6) aus dem Laminat in einem Zwischenraum zwischen Konstruktionsteilen (5) von Maschinen oder Apparaten anbringt und danach erhitzt, wobei der duromere Kunststoff zunächst erweicht und das Laminat dadurch infolge Entspannens der elastisch komprimierten Fasermasse expandiert, so daß es die genannten Zwischenräume ausfüllt und der Kunststoff danach aushärtet.

11. Verwendung nach Anspruch 10, dadurch gekennzeichnet, daß das Erhitzen durch Tränken des Laminat-Zuschnitts (6) in einem heißen flüssigen, duromeren Kunststoff als Tränkmedium erfolgt, welches die Poren des expandierten Laminat-Zuschnittes (7) ausfüllt und der duromere Kunststoff des Laminates gemeinsam mit dem in den Poren des expandierten Laminats aufgenommenen Tränkmedium aushärtet.

12. Verwendung nach Anspruch 10 oder 11, dadurch gekennzeichnet, daß der im Laminat (4) gegebenenfalls enthaltene Katalysator zumindest überwiegend zur Beschleunigung der Härtungsreaktion des duromeren Tränkmediums dient.

## Claims

1. A laminate (4) based on a plastics material and highly elastic reinforcing fibres, characterized in that it contains highly elastic reinforcing fibres such as glass fibres in the elastically compressed state and a heat-softenable duromeric plastics material as binder and is consequently expandable under heat.

2. A laminate according to claim 1, characterized in that the duromeric plastics material has an epoxy resin base.

3. A laminate according to claim 2, characterized in that the epoxy resin is constructed on the basis of a diglycidyl ether of bisphenol A.

4. A laminate according to any one of claims 1 - 3, characterized in that its resin content amounts to from 10 to 28 % by weight.

5. A laminate according to claim 4, characterized in that its resin content amounts to from 10 to 20 % by weight.

6. A process for producing a laminate according to any one of claims 1 to 5, characterized in that fibre mats consisting of the reinforcing fibres are impregnated with the duromeric plastics material, in that a plurality of these impregnated fibre mats (1) are superposed and compressed in a press and brought to temperatures at which the plastics material softens and in that the fibre mats thus compressed are subsequently cooled in their compressed state for the purpose of new solidification of the plastics material and are finally withdrawn from the press as a finished laminate (4).

7. A process according to claim 6, characterized in that compression of the superposed impregnated fibre mats is effected to a predetermined thickness.

8. A process according to claim 6 or claim 7, characterized in that a hardening catalyst is added to the duromeric plastics material, which is not activated during production of the laminate.

9. A process according to any one of claims 6 to 8, characterized in that one or more of the impregnated fibre mats (1) are compressed in the press at a press plate temperature of from 110° to 155°C.

10. Use of a laminate according to any one of claims 1 to 5 or a laminate produced according to claims 6 to 8, characterized in that a blank (6) of the laminate is inserted into an interspace between structural parts (5) of machines or apparatuses and then heated, the duromeric plastics material firstly being softened and the laminate thereby expanding as a result of the relaxation of the elastically compressed fibre body, such that it fills the above-mentioned interspaces and the plastics material is thereafter hardened.

11. Use according to claim 10, characterized in that heating is effected by impregnation of the laminate blank (6) in a hot, liquid, duromeric plastics material as impregnating agent, which fills the pores of the expanded laminate blank (7), the duromeric plastics material of the laminate hardening together with the impregnating agent absorbed in the pores of the expanded laminate.

12. Use according to claim 10 or claim 11, characterized in that the catalyst optionally contained in the laminate (4) serves at least mainly to accelerate the hardening reaction of the duromeric impregnating agent.

## Revendications

1. Stratifié (4) à base d'une matière synthétique et de fibres de renforcement hautement élastique caractérisé en ce qu'il contient des fibres de renforcement hautement élastique telles que des fibres de verres à l'état élastiquement comprimé et une matière plastique thermodurcissable pouvant se ramollir à la chaleur comme liant et qu'il peut, par conséquent, s'expanser à la chaleur.

2. Stratifié selon la revendication 1, caractérisé en ce que la matière plastique thermodurcissable est une matière à base d'une résine époxyde.

3. Stratifié selon la revendication 2, caractérisé en ce que la résine époxyde est à base d'un diglycidyléther du bisphénol A.

4. Stratifié selon l'une quelconque des revendications 1 à 3, caractérisé en ce que sa proportion en résine atteint à 10 à 28% en poids.

5. Stratifié selon la revendication 4, caractérisé en ce que sa proportion en résine atteint 10 à 20% en poids.

6. Procédé de préparation d'un stratifié selon l'une quelconque des revendications de 1 à 5, caractérisé en ce que des mats de fibres constitués des fibres de renforcement sont imprégnés par la matière plastique thermodurcissable, que plusieurs de ces mats de fibres (1) imprégnées sont comprimés l'une au-dessus de l'autre dans une presse et sont portés à des températures auxquelles la matière plastique se ramollit et que, ensuite, les mats de fibres ainsi comprimés sont refroidis à l'état comprimé pour une resolidification de la matière plastique pour être finalement retirés de la presse sous forme de stratifiés finis (4).

7. Procédé selon la revendication 6, caractérisé en ce que la compression des mats de fibre imprégnées superposées les unes aux autres se fait à une épaisseur prédéterminée.

8. Procédé selon les revendications 6 ou 7, caractérisé en ce que, à la matière plastique thermodurcissable, on ajoute un catalyseur de durcissement qui n'est pas encore activé pendant la fabrication du stratifié.

9. Procédé selon l'une quelconque des revendications 6 à 8, caractérisé en ce qu'un ou plusieurs des mats de fibres imprégnées (1) est comprimé dans la presse à une température de plaques de compression de 110 à 155°C.

10. Utilisation d'un stratifié selon l'une quelconque des revendications de 1 à 5 ou d'un stratifié fabriqué selon l'une quelconque des revendications 6 à 8, caractérisée en ce que l'on introduit une section (6) du stratifié dans un espace intercalaire existant entre les pièces de construction (5) de machines ou d'appareillages et après cela on les chauffe, ce par quoi la matière thermoplastique tout d'abord se ramollit et le stratifié s'expanse par suite de la détente de la masse fibreuse comprimée élastiquement de telle sorte qu'il remplit des espaces intercalaires cités et ensuite la matière plastique durcit.

11. L'utilisation selon la revendication 10, caractérisée en ce que le chauffage se fait par imprégnation de la section (6) de stratifié dans une matière plastique thermodurcissable liquide chaude servant de milieu d'imprégnation qui remplit les pores de la section (7) de stratifié expansé et la matière plastique thermodurcissable du stratifié durcit en même temps que le milieu d'imprégnation absorbé dans les pores du stratifié expansé.

12. Utilisation selon la revendication 10 ou 11, caractérisée en ce que le catalyseur contenu éventuellement dans le stratifié (4) sert tout au moins de façon prédominante, à l'accélération de la réaction de durcissement du milieu d'imprégnation thermodurcissable.
